(19) Europäisches Patentamt

European Patent Office

Office européen des brevets

(11) **EP 4 403 305 A1**

(12) ## EUROPEAN PATENT APPLICATION
published in accordance with Art. 153(4) EPC

(43) Date of publication:
**24.07.2024 Bulletin 2024/30**

(21) Application number: **21957565.1**

(22) Date of filing: **17.09.2021**

(51) International Patent Classification (IPC):
**B24D 3/00** (2006.01)   **C09K 3/14** (2006.01)

(52) Cooperative Patent Classification (CPC):
**A46B 17/08; A46D 1/04; A46D 9/00; B24D 3/00; B24D 3/28; B24D 11/00; B24D 13/14; C09K 3/14**

(86) International application number:
**PCT/JP2021/034350**

(87) International publication number:
**WO 2023/042384 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Taimei Chemicals Co., Ltd.**
  **Kamiina-gun, Nagano 399-4597 (JP)**
- **Xebec Technology Co., Ltd.**
  **Tokyo 102-0083 (JP)**

(72) Inventors:
- **KARASAWA, Makikazu**
  **Kamiina-gun, Nagano 399-4597 (JP)**
- **YAMAZAKI, Shinnosuke**
  **Kamiina-gun, Nagano 399-4597 (JP)**
- **AKASHI, Mitsuhisa**
  **Kamiina-gun, Nagano 399-4597 (JP)**
- **FUKUSHIMA, Keisuke**
  **Tokyo 102-0083 (JP)**

(74) Representative: **Plougmann Vingtoft a/s**
**Strandvejen 70**
**2900 Hellerup (DK)**

(54) **LINEAR ABRASIVE MEMBER FOR POLISHING BRUSH, AND POLISHING BRUSH**

(57)     A wire-shaped grinding element (10) is used as a grinding element for a polishing brush. The wire-shaped grinding element (10) includes inorganic filaments and a resin that impregnates the inorganic filaments and is cured. The inorganic filaments contain 80 to 90% by weight of an alumina component and 20 to 10% by weight of a silica component. The crystal structure of the inorganic filaments includes mullite crystals and intermediate alumina. The mullite crystals have an average grain size smaller than 25 nm.

FIG.1

**Description**

Field

The present invention relates to a wire-shaped grinding element for a polishing brush including inorganic filaments, and a polishing brush including a grinding element bundle of a plurality of wire-shaped grinding elements.

Background

A grinding element used for a grinder is described in Patent Literature 1. The grinding element in Patent Literature 1 is formed of inorganic filaments impregnated with a resin. The inorganic filaments contain 80 to 90% by weight of an alumina component and 20 to 10% by weight of a silica component. The crystal structure of the inorganic filaments includes mullite crystals and intermediate alumina. The average grain size of the mullite crystals is 25 nm to 70 nm. In the grinding element in Patent Literature 1, the hardness of the inorganic filaments is high because the inorganic filaments contain 80% by weight or more of an alumina component. In addition, the grinding power for polishing or grinding a workpiece is large because the average grain size of the mullite crystals is 25 nm or more.

A polishing brush including wire-shaped grinding elements made of resin-impregnated and cured inorganic filaments is described in Patent Literature 2. The polishing brush in Patent Literature 2 has a grinding element bundle of a plurality of wire-shaped grinding elements, and a grinding element holder holding one end portion of the grinding element bundle. The wire-shaped grinding elements in Patent Literature 2 are formed by impregnating and curing an assembly of alumina fiber filaments with an epoxy resin or silicone resin and forming the assembly into a wire-like shape.

Citation List

Patent Literature

Patent Literature 1: Japanese Patent Application Laid-open Publication No. H10-183427
Patent Literature 2: WO 2014/208566

Summary

Technical Problem

Here, if the grinding element for a grinder described in Patent Literature 1 is formed into a wire-like shape and used as a wire-shaped grinding element for a polishing brush, the polishing brush can have a sufficient grinding power. However, the inventors of the present invention have conducted elaborate studies and found that such a polishing brush has room for improvement in wear resistance of the wire-shaped grinding element.

In view of the above, an object of the present invention is to provide a wire-shaped grinding element for a polishing brush that has excellent wear resistance while ensuring grinding power. Another object is to provide a polishing brush including such a wire-shaped grinding element for a polishing brush.

Solution to Problem

The inventors of the present invention have conducted elaborate studies and found that when a grinding element that includes inorganic filaments containing 80 to 90% by weight of an alumina component and 20 to 10% by weight of a silica component and in which the crystal structure of the inorganic filaments includes intermediate alumina and mullite is employed as a wire-shaped grinding element for a polishing brush, the larger the crystallites of mullite in the crystal structure, the more the wear resistance of the wire-shaped grinding element is affected. More specifically, when the polishing brush grinds or polishes a workpiece, the distal end of the wire-shaped grinding element is brought into contact with a section to be polished in the workpiece with the polishing brush being rotated around a predetermined axis of rotation. Thus, unlike a grinder that performs polishing with a grinding element in contact with a surface of a workpiece, the wire-shaped grinding element repeats intermittently impacting a section to be polished in the workpiece during the polishing process. Since the wire-shaped grinding element including inorganic filaments and a resin has elasticity, the trajectory drawn by the distal end varies with rotation of the polishing brush, and the wire-shaped grinding element intermittently impacts the workpiece from various directions. Here, mullitization develops in the inorganic filaments having large crystallites. When mullitization develops, the inorganic filaments become brittle. Thus, the wire-shaped grinding element having large mullite crystals is prone to brittle collapse against such intermittent impact from multiple directions. As a result, the wire-shaped grinding element having large mullite crystals in the crystal structure is more susceptible to wear.

Meanwhile, the inventors of the present invention have conducted elaborate studies and found that when a grinding element including inorganic filaments containing 80 to 90% by weight of an alumina component and 20 to 10% by weight of a silica component is employed as a wire-shaped grinding element for a polishing brush, the grinding power of the wire-shaped grinding element can be ensured even with mullite crystals smaller than 25 nm. In other words, as long as the inorganic filaments contain 80% or more by weight of an alumina component, the hardness of the wire-shaped grinding element can be ensured. When the mullite crystals are smaller than 25 nm, mullitization is suppressed in the inorganic filaments and therefore the inorganic filaments can be prevented from becoming brittle. This configuration can prevent brittle collapse of the inorganic filaments when the wire-shaped grinding element comes into contact with a workpiece, so that the inorganic filaments bite into the workpiece. When the polishing brush polishes or grinds a workpiece, unlike when a grinder polishes a workpiece, the wire-shaped grinding element intermittently impacts the workpiece from various directions. Thus, the wire-shaped grinding element can have a predetermined grinding power. The present invention is based on these findings.

In order to solve the above problem, a wire-shaped grinding element for a polishing brush according to the present invention includes inorganic filaments and a resin that impregnates the inorganic filaments and solidifies, wherein the inorganic filaments contain 80 to 90% by weight of an alumina component and 20 to 10% by weight of a silica component, the inorganic filaments have a crystal structure including mullite crystals and intermediate alumina, and the mullite crystals have an average grain size smaller than 25 nm.

In the wire-shaped grinding element for a polishing brush according to the present invention, the average grain size of the mullite crystals in the crystal structure of the inorganic filaments is smaller than 25 nm. This configuration can prevent the inorganic filaments from becoming brittle and thus can prevent brittle collapse of the inorganic filaments when the wire-shaped grinding element for a polishing brush intermittently impacts a section to be polished in the workpiece from multiple directions. Thus, the wear resistance of the wire-shaped grinding element for a polishing brush is improved. On the other hand, since the inorganic filaments contain 80% by weight or more of an alumina component, the hardness of the inorganic filaments is ensured. Furthermore, the smaller mullite crystals can prevent the inorganic filaments from becoming brittle. Thus, when the wire-shaped grinding element for a polishing brush intermittently impacts a section to be polished in the workpiece, brittle collapse of the inorganic filaments is prevented, so that the inorganic filaments bite into the workpiece. Furthermore, when polishing a workpiece, the wire-shaped grinding element for a polishing brush intermittently impacts a section to be polished in the workpiece from multiple directions. Thus, the grinding power of the wire-shaped grinding element for a polishing brush can be ensured even when the average grain size of the mullite crystals is 25 nm or less.

In the present invention, it is preferable that the average grain size of the mullite crystals is 20 nm or less. With such a configuration, the wear resistance of the wire-shaped grinding element for a polishing brush can be further improved.

In the present invention, it is preferable that the alumina component of the inorganic filaments is 85% by weight or more. With such a configuration, it is easier to increase the hardness of the inorganic filaments. Thus, it is easier to ensure the grinding power of the wire-shaped grinding element for a polishing brush.

In the present invention, the resin may be an epoxy resin.

In the present invention, the average grain size of the mullite crystals may be calculated using the following formula, based on a diffraction chart obtained by irradiating the inorganic filaments with X-rays.

[Math. 1]

$$D_{hkl} = \frac{0.9\lambda}{\beta_{\frac{1}{2}} \cdot \cos\theta}$$

$D_{hkl}$: average grain size of the (210) plane
$\lambda$: X-ray wavelength
$\theta$: X-ray grazing incidence angle
$\beta_{1/2}$: half width of a diffraction line from the (210) plane of mullite with a crystal structure by X-ray diffraction with $2\theta$ appearing at around 26°

A polishing brush according to the present invention includes a plurality of wire-shaped grinding elements disposed in parallel with each other and a grinding element holder holding one end portion of each of the wire-shaped grinding elements, wherein each of the wire-shaped grinding elements is the above wire-shaped grinding element for a polishing brush.

The polishing brush according to the present invention can prevent or reduce wear of the wire-shaped grinding elements while ensuring its grinding power.

Brief Description of Drawings

FIG. 1 is a perspective view of a polishing brush.
FIG. 2 is a flowchart of a method of producing wire-shaped grinding elements for a polishing brush.
FIG. 3 is a diffraction chart obtained by irradiating inorganic filaments of an example with X-rays.
FIG. 4 is a diffraction chart obtained by irradiating inorganic filaments of a comparative example with X-rays.
FIG. 5 is an illustration of a method of measuring grinding power and wear resistance.
FIG. 6 is a graph illustrating the relation between the bristle length of the polishing brush and the amount of side surface dullness.
FIG. 7 is a graph illustrating the relation between the bristle length of the polishing brush and the amount of wear.

Description of Embodiments

A polishing brush according to embodiments of the present invention will be described below with reference to the drawings.

(Polishing Brush)

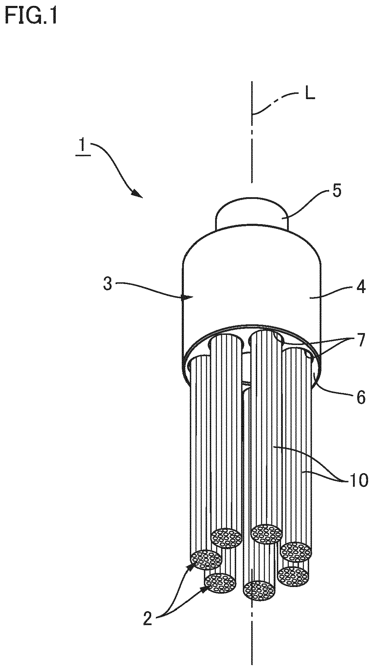

FIG. 1 is a perspective view of a polishing brush. As illustrated in FIG. 1, a polishing brush 1 has a plurality of grinding element bundles 2 and a grinding element holder 3 holding one end portion of each of the grinding element bundles 2. The grinding element holder 3 has a circular body 4 and a shaft 5 extending coaxially from the body 4. The shaft 5 is an attachment part for attaching the polishing brush 1 to a machine tool or the like. A front end surface of the body 4 located on the side opposite to the shaft 5 is a grinding element-holding surface 6. The grinding element-holding surface 6 has a plurality of grinding element-holding recesses 7. In this example, seven grinding element-holding recesses 7 are provided at equiangular intervals around the axis L of the grinding element holder 3.

Each grinding element bundle 2 includes a plurality of wire-shaped grinding elements 10 (wire-shaped grinding elements for a polishing brush) disposed in parallel with each other. One end portion of each of the wire-shaped grinding elements 10 is inserted in the corresponding grinding element-holding recess 7 and fixed to the grinding element holder 3 by adhesive. In the example illustrated in FIG. 1, the cross-section of the wire-shaped grinding element 10 is circular. The cross-section of the wire-shaped grinding element 10 is not limited to a circular shape and may be polygonal.

The wire-shaped grinding element 10 includes inorganic filaments and a resin that impregnates the inorganic filaments and is cured. The inorganic filaments are polycrystalline fibers containing 80 to 90% by weight of an alumina component and 20 to 10% by weight of a silica component.

The polishing brush 1 is attached to the head of a machine tool and used for polishing or grinding a workpiece W. In machining the workpiece W, the polishing brush 1 is rotated around the axis L. Thus, the polishing brush 1 can be called a rotary polishing brush.

The grinding element holder 3 may have a single circular grinding element-holding recess 7 in the center of the grinding element-holding surface 6. In this case, the polishing brush 1 has one grinding element bundle 2 in the center of the grinding element holder. The grinding element holder 3 may have an annular grinding element-holding recess 7 around the axis L. In this case, the polishing brush 1 has one annular grinding element bundle 2 of a plurality of wire-shaped grinding elements 10 arranged annularly around the axis L.

(Method of Producing Wire-Shaped Grinding Element)

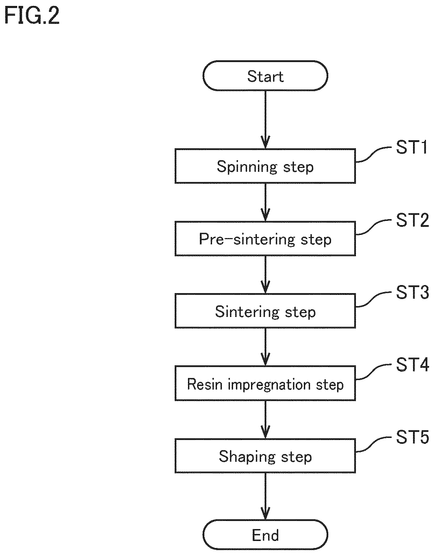

FIG. 2 is a flowchart of a method of producing the wire-shaped grinding elements 10. As illustrated in FIG. 2, the method of producing the wire-shaped grinding elements 10 includes a spinning step ST1, a pre-sintering step ST2, a sintering step ST3, a resin impregnation step ST4, and a shaping step ST5 in this order. In the spinning step ST1, an aqueous spinning solution containing basic aluminum chloride, colloidal silica, and polyvinyl alcohol is dry-spun to produce precursor fibers. In the pre-sintering step ST2, the precursor fibers are fired at 900°C or higher and 1300°C or lower and turned into ceramics to produce inorganic filaments. In the sintering step ST3, the inorganic filaments are heated at high temperatures of 1300°C or higher for around 20 seconds. The heating temperature in the sintering step ST3 is higher than the heating temperature in the pre-sintering step ST2.

In the resin impregnation step ST4, the inorganic filaments are aligned as appropriate to form an assembly. In the resin impregnation step ST4, the assembly is impregnated with a thermosetting resin such as an epoxy resin or phenolic resin, and the resin is cured. In the shaping step ST5, the resin-impregnated and cured assembly is cut into a predetermined length. This step yields the wire-shaped grinding elements 10. Here, the assembly impregnated with the resin is drawn out to pass through a die having an opening with a predetermined shape and then cured, so that the cross-sectional shape of the wire-shaped grinding element 10 can be formed into a shape corresponding to the shape of the opening of the die.

A specific example of the production method will be described below. First, in the spinning step ST1, 2.5 kg of partially hydrolyzed polyvinyl alcohol with the average degree of polymerization of 1700 is dissolved in 34 kg of an aqueous solution of basic aluminum chloride containing 13.2% by weight of aluminum ions and 11.45% by weight of chlorine ions, and 7.5 kg of colloidal silica containing 20% by weight of silicon dioxide, to prepare a spinning solution with a viscosity of about 1000 poise at 20°C. Next, the spinning solution is dry-spun by being extruded through a spinning nozzle with 1000 holes. In the pre-sintering step ST2, the spun inorganic filaments are fired at 900°C to 1300°C and turned into ceramics to produce an assembly. Subsequently, in the sintering step ST3, the assembly is passed through a pipe furnace at 1300°C to 1400°C and continuously wound onto a first bobbin under tension. In doing so, the speed of passing the assembly is adjusted so that the heating time is 20 seconds.

In the resin impregnation step ST4, the assembly is unrolled from the first bobbin, passed through a resin tank storing an uncured resin and a heating furnace, and wound onto a second bobbin. Here, the assembly impregnated with the resin by passing through the resin tank is passed through a die having an opening with a predetermined shape before it reaches the heating furnace, so that the cross-sectional shape of the wire-shaped grinding element 10 can be formed into a shape corresponding to the shape of the opening of the die. The resin with which the assembly is impregnated can have the following composition.

Epoxy resin (jER828 manufactured by Mitsubishi Chemical Corporation) 60 parts by weight

Epoxy resin (jER1001 manufactured by Mitsubishi Chemical Corporation) 40 parts by weight

Boron trifluoride monoethyl amine 2.5 parts by weight

Methyl ethyl ketone 35 parts by weight

In the shaping step ST5, the resin-impregnated and cured assembly is unrolled from the second bobbin and cut into a predetermined size. In the shaping step ST5, the resin-impregnated and cured assembly may be cut into a predetermined size without being wound onto the second bobbin.

(Example)

The wire-shaped grinding element 10 in an example includes inorganic filaments and a resin that impregnates the inorganic filaments. The inorganic filaments contain 85% by weight of an alumina component and 15% by weight of a silica component. The crystal structure of the inorganic filaments includes mullite crystals and intermediate alumina. The average grain size of the mullite crystal grains is 20 nm.

In production of the wire-shaped grinding element 10 in the example, the heating temperature in the pre-sintering step ST2 is 1000°C. The heating temperature in the sintering step ST3 is 1380°C. The heating time in the sintering step ST3 is 20 seconds.

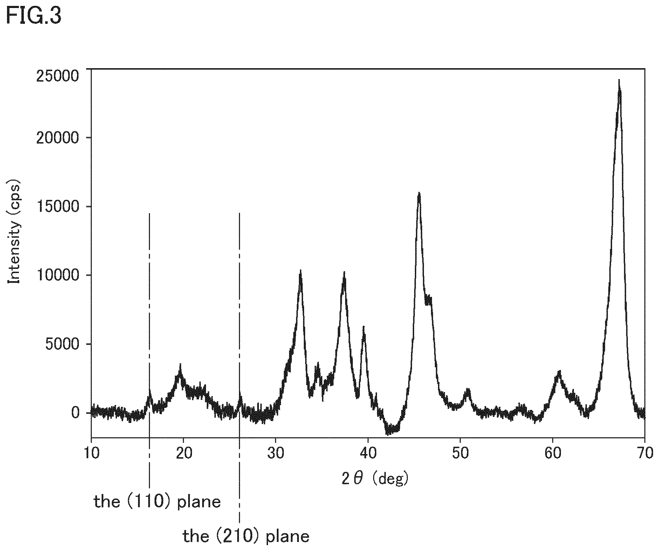

Here, the crystal structure of the inorganic filaments was evaluated using X-ray diffraction. Specifically, after the sintering step ST3 and before the resin impregnation step ST4, the inorganic filaments were irradiated with X-rays and a diffraction chart was obtained. FIG. 3 is a diffraction chart of the inorganic filaments in the example irradiated with X-rays. Based on the diffraction chart, the average grain size of the mullite crystals was calculated using the following general formula.

[Math. 2]

$$D_{hkl} = \frac{0.9\lambda}{\beta_{\frac{1}{2}} \cdot \cos\theta}$$

$D_{hkl}$: average grain size of the (210) plane

$\lambda$: X-ray wavelength

$\theta$: X-ray grazing incidence angle

$\beta_{1/2}$: half width of a diffraction line from the (210) plane of mullite with a crystal structure by X-ray diffraction with $2\theta$ appearing at around 26°.

Here, the average grain size of the mullite crystals in the inorganic filaments from which the diffraction chart illustrated in FIG. 3 was obtained is $D_{hk1}$ = 20 (nm).

The diffraction line from the (210) plane of mullite has a lower peak as the grain size of the mullite crystal decreases, and may be buried in other diffraction lines. For example, when the grain size of the mullite crystal is smaller than 25 nm, the peak of the diffraction line from the (210) plane of mullite may be buried in other diffraction lines, so that the half width of the diffraction line may fail to be obtained. Then, in the case where the peak of the diffraction line from the (210) plane of mullite is buried in other diffraction lines and the half width of the diffraction line fails to be obtained, the inventors of the present invention have used other measurement methods or the like to experimentally confirm that the average grain size of the mullite crystals is 20 nm or less. Even if the peak of the diffraction line from the (210) plane of mullite is buried in other diffraction lines, it can be determined that the crystal structure of the inorganic filaments includes mullite crystals as long as the peak of the diffraction line from the (110) plane of mullite appears in the diffraction chart. Even if the peak of the diffraction line peak from the (210) plane of mullite is buried in other diffraction lines, whether the crystal structure of the inorganic filaments has mullite crystals can be determined by observing the inorganic filaments with a transmission electron microscope.

(Comparative Example)

A wire-shaped grinding element 10 in a comparative example includes inorganic filaments and a resin that impregnates the inorganic filaments. The inorganic filaments contain 85% by weight of an alumina component and 15% by weight of a silica component. The crystal structure of the inorganic filaments includes mullite crystals and intermediate alumina.

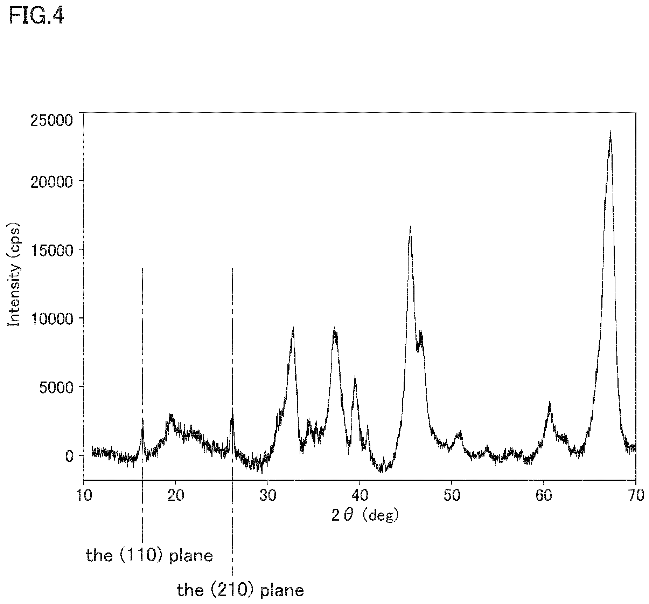

FIG. 4 is a diffraction chart of the inorganic filaments in the comparative example irradiated with X-rays. In the diffraction chart illustrated in FIG. 4, the peak of the diffraction line from the (210) plane of mullite clearly appears. The average grain size of the mullite crystals in the inorganic filaments in the comparative example that is obtained based on the diffraction chart illustrated in FIG. 4 is $D_{hkl}$ = 35 (nm). In other words, the average grain size of the mullite crystal is 25 nm or more.

In production of the wire-shaped grinding element 10 in the comparative example, the heating temperature in the pre-sintering step ST2 is 1000°C. The heating temperature in the sintering step ST3 is 1390°C. The heating time in the sintering step ST3 is 30 seconds.

The heating temperature in the sintering step ST3 in the comparative example is higher than the heating temperature in the sintering step ST3 in the example. The heating time in the sintering step ST3 in the comparative example is also longer than the heating temperature in the sintering step ST3 in the example. As a result, the wire-shaped grinding element 10 in the comparative example has mullite crystals with an average grain size of 25 nm or more in the crystal structure. Thus, the average grain size of the mullite crystals in the crystal structure of the inorganic filaments can be controlled by controlling the heating temperature and the heating time in the sintering step ST3 in production of the wire-shaped grinding element 10.

(Grinding Power and Wear Resistance)

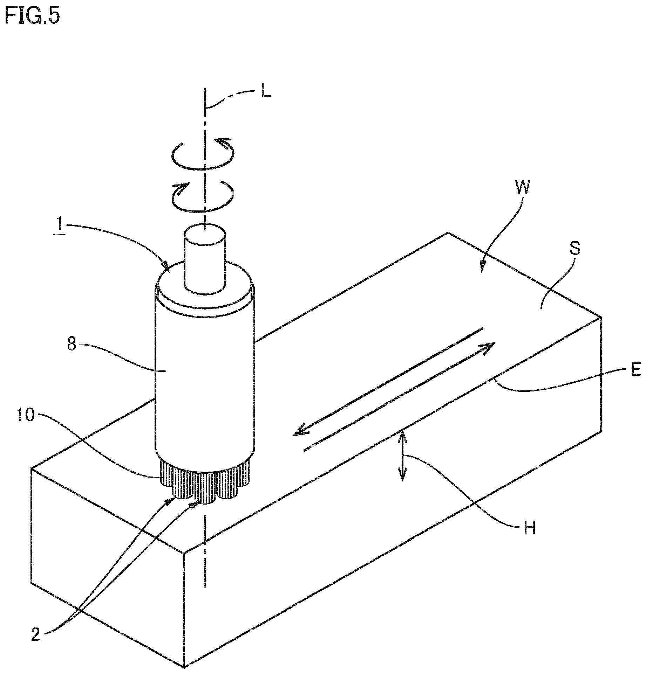

FIG. 5 is an illustration of a method of measuring grinding power and wear resistance. As illustrated in FIG. 5, in the measurement of grinding power and wear resistance, a workpiece W was subjected to a dry polishing process with a sleeve 8 attached to the polishing brush 1 in FIG. 1. The material of the workpiece W is S50C (carbon steel for machine structural use). A section to be polished in the workpiece W is an edge portion of the workpiece W that is bent at right angle. In the polishing process, the polishing brush 1 was attached to a machine tool and moved back and forth 10 times along the section to be polished while the polishing brush 1 is rotated around the axis L. The length processed is 100 mm. In the polishing process, the direction of rotation of the polishing brush 1 was reversed in the forward and backward directions.

After completion of the process, the amount of side surface dullness at the edge E in the section to be polished and the amount of wear of the wire-shaped grinding element 10 were measured. Here, when the edge portion of the workpiece W that is bent at right angle serves as a section to be polished subjected to the polishing process, the amount by which the edge E of the edge portion is chamfered is referred to as the amount of dullness. The amount of side surface dullness refers to the amount shaped off in the height direction H from the upper surface S of the workpiece W when the edge E of the edge portion of the workpiece W is shaved off by the polishing process.

The diameter of the polishing brush 1 (the diameter of the grinding element holder 3) used for the measurement is 25 mm. The wire-shaped grinding elements 10 had three kinds of bristle lengths: 75 mm, 50 mm, or 30 mm. Here, the bristle length of the grinding element is the length dimension from the grinding element-holding surface 6 of the grinding element holder 3 to the distal end of the wire-shaped grinding element 10. In the wire-shaped grinding element 10 with each bristle length, the amount of wire-shaped element exposed forward from the sleeve 8 was 15 mm. The brush resting rate by which the polishing brush 1 rests on the workpiece W is 50%. With a brush resting rate of 50%, a half of the polishing brush 1 rests on the upper surface S of the workpiece W and the other half is positioned outside the edge E. The depth of cut of the polishing brush 1 in the workpiece W is 1.0 mm. The rotational speed of the polishing brush 1 during the polishing process is 4000 revolutions per minute. The feed rate of the polishing brush 1 during the polishing process is 2500 mm/min.

The grinding power was evaluated based on the amount of side surface dullness at the edge E of the workpiece W after the polishing process. The larger the amount of side surface dullness, the greater the grinding power. The wear resistance was evaluated based on the wear length of the brush wire-shaped element after the polishing process. The shorter the wear length of the brush wire-shaped element after the polishing process, the higher the wear resistance. Table 1 lists the amount of side surface dullness when each of the wire-shaped grinding element in the example and the wire-shaped grinding element in the comparison example was employed. Table 2 lists the amount of wear in each of the wire-shaped grinding element in the example and the wire-shaped grinding element in the comparative example.

[Table 1]

| Bristle length (mm) | Example (mm) | Comparative Example (mm) |
|---|---|---|
| 75 | 0.142 | 0.141 |
| 50 | 0.153 | 0.154 |
| 30 | 0.181 | 0.185 |

[Table 2]

| Bristle length (mm) | Example (mm) | Comparative Example (mm) |
|---|---|---|
| 75 | 0.040 | 0.080 |
| 50 | 0.045 | 0.080 |
| 30 | 0.230 | 0.291 |

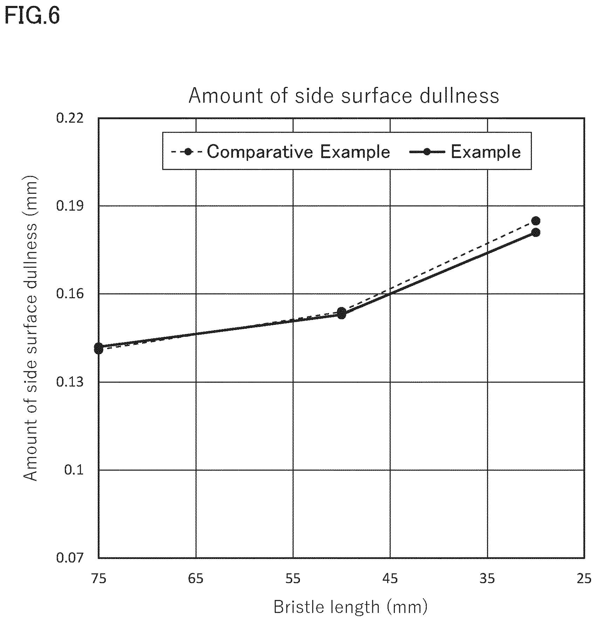

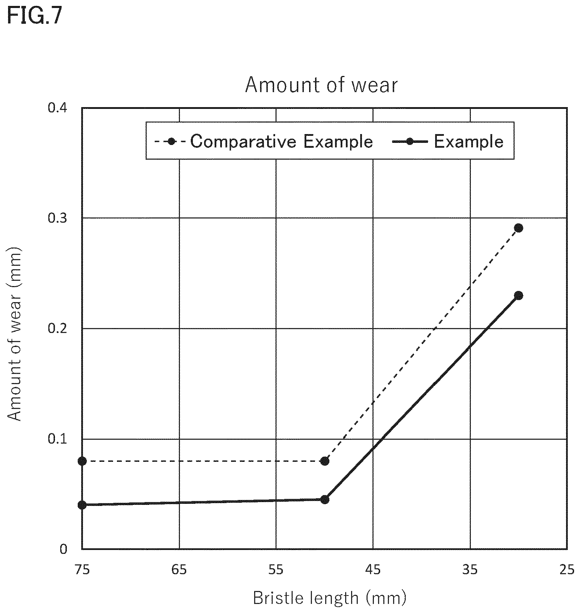

FIG. 6 is a graph illustrating the relation between the bristle length of the wire-shaped grinding element 10 and the amount of side surface dullness. FIG. 6 is a graph of the values in Table 1. FIG. 7 is a graph illustrating the relation between the bristle length of the wire-shaped grinding element 10 and the amount of wear. FIG. 7 is a graph of the values in Table 2. Here, as the bristle length decreases, the grinding power of the wire-shaped grinding element 10 increases and the amount of wear increases. This is because as the bristle length decreases, the rigidity of the wire-shaped grinding element 10 increases and the wire-shaped grinding element 10 more easily bites into the workpiece W.

As illustrated in Table 1 and FIG. 6, as for the amount of side surface dullness, there is only a difference of less than 0.005 mm between the polishing brush 1 employing the wire-shaped grinding element 10 in the example and the polishing brush 1 employing the wire-shaped grinding element 10 in the comparative example. Thus, the difference in grinding power between the polishing brush 1 employing the wire-shaped grinding element 10 in the example and the polishing brush 1 employing the wire-shaped grinding element 10 in the comparative example is extremely small. The polishing brush 1 employing the wire-shaped grinding element 10 in the example therefore can ensure a grinding power even when the average grain size of the mullite crystals in the crystal structure of the inorganic filaments is smaller than 25 nm. Furthermore, if the difference in grinding power is to the extent listed in Table 1 and FIG. 6, a grinding power equivalent to that in the comparative example can be obtained by increasing the rotational speed during the polishing process in the polishing brush 1 employing the wire-shaped grinding element 10 in the example.

As illustrated in Table 2 and FIG. 7, the amount of wear of the polishing brush 1 employing the wire-shaped grinding element 10 in the example is obviously smaller than that of the polishing brush 1 employing the wire-shaped grinding element 10 in the comparative example. In particular, with a long bristle length, the amount of wear of the polishing brush 1 employing the wire-shaped grinding element 10 in the example is reduced to about 1/2 of the amount of wear of the polishing brush 1 employing the wire-shaped grinding element 10 in the comparative example. The wear resistance of the polishing brush 1 employing the wire-shaped grinding element 10 in the example is therefore higher than that of the polishing brush 1 employing the wire-shaped grinding element 10 in the comparative example.

(Operation Effects)

In the wire-shaped grinding element 10 in this example, the average grain size of the mullite crystals in the crystal structure of the inorganic filaments is smaller than 25 nm. This configuration can prevent the inorganic filaments from becoming brittle and thus can prevent brittle collapse of the inorganic filaments when the wire-shaped grinding element for a polishing brush intermittently impacts a section to be polished in the workpiece W from multiple directions. Thus, the wear resistance of the wire-shaped grinding element for a polishing brush is improved. Furthermore, in this example, the average grain size of the mullite crystals is 20 nm or less. Thus, the wear resistance of the wire-shaped grinding element 10 is further improved.

On the other hand, since the inorganic filaments contain 80% by weight or more of an alumina component, the hardness of the inorganic filaments is ensured. Furthermore, the smaller mullite crystals can prevent the inorganic filaments from becoming brittle. Thus, when the wire-shaped grinding element 10 intermittently impacts a section to be polished in the workpiece W, brittle collapse of the inorganic filaments can be prevented. Accordingly, when the wire-shaped grinding element for a polishing brush intermittently impacts a section to be polished in the workpiece W, brittle collapse of the inorganic filaments is prevented, so that the inorganic filaments bite into the workpiece W. In addition to this, unlike a grinder that performs polishing with a grinding element in contact with the upper surface S of the workpiece W, the wire-shaped grinding element 10 intermittently impacts the section to be polished in the workpiece W from multiple directions when the workpiece W is polished. Thus, the grinding power of the wire-shaped grinding element 10 can be ensured even when the average grain size of the mullite crystals is 25 nm or less.

Here, the experiments by the inventors have demonstrated that the smaller the average grain size of the mullite crystals in the crystal structure of the inorganic filaments, the more the wear resistance of the wire-shaped grinding element 10 employed in the polishing brush 1 is improved.

Here, when the inorganic filaments contain 85% by weight or more of an alumina component, the hardness of the inorganic filaments can be increased compared to when the alumina component is lower than 85% by weight. Thus, to ensure the polishing power of the polishing brush 1, it is desirable to have 85% by weight or more of an alumina component. When the alumina component is 85% by weight or more, the silica component is 15% by weight or less.

The inorganic filaments may contain other components in addition to the alumina component and the silica component. Even in this case, the grinding power of the wire-shaped grinding element 10 can be ensured as long as the inorganic filaments contain 80 to 90% by weight of an alumina component and 20 to 10% by weight of a silica component.

**Claims**

1. A wire-shaped grinding element for a polishing brush, comprising:

   inorganic filaments; and
   a resin that impregnates the inorganic filaments and solidifies, wherein
   the inorganic filaments contain 80 to 90% by weight of an alumina component and 20 to 10% by weight of a silica component,
   the inorganic filaments have a crystal structure including mullite crystals and intermediate alumina, and
   the mullite crystals have an average grain size smaller than 25 nm.

2. The wire-shaped grinding element for a polishing brush according to claim 1, wherein the average grain size of the mullite crystals is 20 nm or less.

3. The wire-shaped grinding element for a polishing brush according to claim 1, wherein the alumina component of the inorganic filaments is 85% by weight or more.

4. The wire-shaped grinding element for a polishing brush according to claim 1, wherein the resin is an epoxy resin.

5. The wire-shaped grinding element for a polishing brush according to claim 1, wherein the average grain size of the mullite crystals is calculated using the following formula, based on a diffraction chart obtained by irradiating the inorganic filaments with X-rays:

[Formula 1]

$$D_{hkl} = \frac{0.9\lambda}{\beta_{\frac{1}{2}} \cdot \cos\theta}$$

$D_{hkl}$: average grain size of a (210) plane
$\lambda$: X-ray wavelength
$\Theta$: X-ray grazing incidence angle
$\beta_{1/2}$: half width of a diffraction line from the (210) plane of mullite with a crystal structure by X-ray diffraction with $2\theta$ appearing at around 26°.

6. A polishing brush comprising:

a plurality of wire-shaped grinding elements disposed in parallel with each other; and
a grinding element holder that holds one end portion of each of the wire-shaped grinding elements,
wherein each of the wire-shaped grinding elements is the wire-shaped grinding element for a polishing brush according to claim 1.

FIG.1

FIG.2

```
                    ┌─────────────┐
                    │    Start    │
                    └──────┬──────┘
                           │
                           ▼
              ┌──────────────────────────┐        ST1
              │      Spinning step       │
              └────────────┬─────────────┘
                           │
                           ▼
              ┌──────────────────────────┐        ST2
              │    Pre-sintering step    │
              └────────────┬─────────────┘
                           │
                           ▼
              ┌──────────────────────────┐        ST3
              │      Sintering step      │
              └────────────┬─────────────┘
                           │
                           ▼
              ┌──────────────────────────┐        ST4
              │  Resin impregnation step │
              └────────────┬─────────────┘
                           │
                           ▼
              ┌──────────────────────────┐        ST5
              │      Shaping step        │
              └────────────┬─────────────┘
                           │
                           ▼
                    ┌─────────────┐
                    │     End     │
                    └─────────────┘
```

FIG.3

FIG.4

the (110) plane

the (210) plane

FIG.5

FIG.6

## Amount of side surface dullness

FIG.7

Amount of wear

## INTERNATIONAL SEARCH REPORT

| International application No. |
|---|
| **PCT/JP2021/034350** |

**A.   CLASSIFICATION OF SUBJECT MATTER**

*B24D 3/00*(2006.01)i; *C09K 3/14*(2006.01)i
FI:   C09K3/14 550D; C09K3/14 550J; B24D3/00 320Z

According to International Patent Classification (IPC) or to both national classification and IPC

**B.   FIELDS SEARCHED**

Minimum documentation searched (classification system followed by classification symbols)

B24D3/00; C09K3/14

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| Y | WO 2014/208566 A1 (TAIMEI CHEMICALS CO., LTD.) 31 December 2014 (2014-12-31) claims 1, 10, paragraphs [0023]-[0024], fig. 1-8 | 1–6 |
| Y | WO 2014/115814 A1 (DENKI KAGAKU KOGYO KK) 31 July 2014 (2014-07-31) claim 1, paragraphs [0002]-[0007], [0019], [0024], examples 4, 6 | 1–6 |
| Y | JP 10-183427 A (TAIMEI CHEMICALS CO., LTD.) 14 July 1998 (1998-07-14) claims 1-2, paragraph [0009] | 1–6 |
| Y | JP 10-217131 A (JIIBETSUKU TECHNOL KK) 18 August 1998 (1998-08-18) example 1 | 1–6 |
| A | JP 6-287816 A (TAIMEI CHEMICALS CO., LTD.) 11 October 1994 (1994-10-11) table 1 | 1–6 |

☐ Further documents are listed in the continuation of Box C.          ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **25 November 2021** | **07 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/034350**

| Patent document cited in search report | | | Publication date (day/month/year) | Patent family member(s) | | | Publication date (day/month/year) |
|---|---|---|---|---|---|---|---|
| WO | 2014/208566 | A1 | 31 December 2014 | US 2016/0128461 A1 claims 1, 10, paragraphs [0030]-[0031], fig. 1-8 CN 105324214 A | | | |
| WO | 2014/115814 | A1 | 31 July 2014 | US 2015/0354099 A1 claim 1, paragraphs [0002]-[0011], [0026], [0030], examples 4, 6 EP 2949791 A1 CN 105051272 A BR 112015017545 A | | | |
| JP | 10-183427 | A | 14 July 1998 | (Family: none) | | | |
| JP | 10-217131 | A | 18 August 1998 | (Family: none) | | | |
| JP | 6-287816 | A | 11 October 1994 | US 5486497 A table 1 KR 10-1994-0019645 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10183427 A

- WO 2014208566 A